# EUROPEAN PATENT SPECIFICATION

(11) **EP 1 323 811 B1**
(45) Date of publication and mention of the grant of the patent: **14.05.2008**
(21) Application number: 02258542.6
(22) Date of filing: 11.12.2002
(51) Int. Cl.: C10L 1/00

(54) **Method for marking hydrocarbons with anthraquinones**
Verfahren zum Markieren von Kohlenwasserstoffen mit Anthrachinonen
Procédé de marquage des hydrocarbures avec des anthraquinones

(30) Priority: 20.12.2001 US 342638 P
(43) Date of publication of application: 02.07.2003
(73) Proprietor: ROHM AND HAAS COMPANY, Philadelphia, Pennsylvania 19106-2399 (US)
(72) Inventor: Ho, Kim Sang, Richboro, Pennsylvania 18954 (US); Chen, Yu-Min, Belmont, Massachussets 02478 (US)
(74) Representative: Kent, Venetia Katherine

(56) References cited:
- EP-A- 0 201 368
- EP-A- 1 001 003
- DE-A- 3 835 489
- US-A- 3 164 449
- US-A- 4 755 012
- US-A- 5 525 516
- DATABASE CROSSFIRE BEILSTEIN [Online] BEILSTEIN INSTITUT ZU FOERDERUNG DER WISSENSCHAFTEN, FRANKFURT AM MAIN; BRN: 382083, 76690, 382665, 382160, 381545, XP002254484 & A. TUNDO: "Coloranti antrachinonici al tino" ANNALI DI CHIMICA, vol. 47, 1957, pages 285-290, XP009016550 Rome

## Description

### Background

This invention relates generally to a method for marking petroleum hydrocarbons with anthraquinone compounds for subsequent identification.

U.S. Pat. No. 4,755,012 discloses a ray absorption filter comprising a 1,4,5,8-tetra(arylamino)anthraquinone. This reference, however, does not suggest a method for marking petroleum hydrocarbons.

Phthalocyanine dyes having absorption maxima above 700 nm are known as petroleum markers, but these materials suffer from disadvantages, including difficulty of preparation and high cost. The problem addressed by this invention is to find an improved method for marking petroleum hydrocarbons with compounds having an absorption maximum above 700 nm.

DE 38 35 489 discloses liquid rocket fuel additives that improve the vaporisation rate and burning stability and that comprise highly coloured yellow to black organic compound. One of the additives disclosed, is a blue dye, indanthron, which is an anthraquinone dimmer. The amount of dye compound used in this prior art is considerably higher than the amount used in the present invention.

US-A-3 164 449 discloses anthraquinone dyes for petroleum, that are highly coloured and visible in the petroleum product. The compounds have a solubility in organic solvents of the order of 10% to 20% by weight and higher.

Finally, US-A-5 525 516 discloses a method of imparting invisible markings for the identification of petroleum hydrocarbons using certain infrared flurophores from the classes of squaraines, phthalocyanines and naphthalocyanines.

### Statement of Invention

The present invention is directed to a method for invisibly marking a liquid petroleum hydrocarbon. The method comprises adding to the liquid petroleum hydrocarbon at least one dye selected from the group consisting of 1,4,5,8-tetrasubstituted anthraquinones and anthraquinone dimers. The absorption maximum of the dye(s) is in the range from 710 nm to 850 nm.

### Detailed Description

All percentages are weight percentages, unless otherwise indicated. Concentrations in parts per million ("ppm") are calculated on a weight/volume basis. The term "petroleum hydrocarbons" refers to products having a predominantly hydrocarbon composition that are derived from petroleum, preferably lubricating oil, brake fluid, hydraulic fluid, gasoline, diesel fuel, kerosene, jet fuel and heating oil. An "alkyl" group is a hydrocarbyl group having from one to twenty carbon atoms in a linear, branched or cyclic arrangement. Alkyl groups optionally have one or more double or triple bonds. Substitution on alkyl groups of one or more halo, hydroxy or alkoxy groups is permitted; alkoxy groups may in turn be substituted by one or more halo substituents. Preferably, alkyl groups have no halo or alkoxy substituents. A "heteroalkyl" group is an alkyl group having at least one carbon has been replaced by O, NR, or S, wherein R is hydrogen, alkyl, aryl or aralkyl. An "aryl" group is a substituent derived from an aromatic hydrocarbon compound. An aryl group has a total of from six to twenty ring atoms, and has one or more rings which are separate or fused. An "aralkyl" group is an "alkyl" group substituted by an "aryl" group. A "heterocyclic" group is a substituent derived from a heterocyclic compound having from five to twenty ring atoms, at least one of which is nitrogen, oxygen or sulfur. Preferably, heterocyclic groups do not contain sulfur. Substitution on aryl or heterocyclic groups of one or more halo, cyano, hydroxy, alkyl, heteroalkyl or alkoxy groups is permitted, with substitution by one or more halo groups being possible on alkyl, heteroalkyl or alkoxy groups. Preferably, aryl and heterocyclic groups do not contain halogen atoms. An "aromatic heterocyclic" group is a heterocyclic group derived from an aromatic heterocyclic compound.

In a preferred embodiment of the invention, a 1,4,5,8-tetrasubstituted anthraquinone dye having formula (I) is added to a petroleum hydrocarbon. 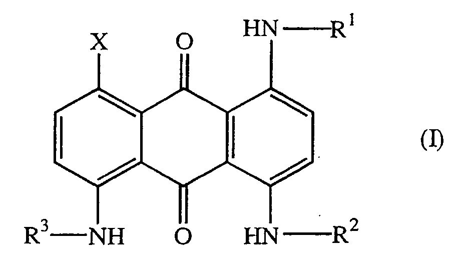 In formula (I), X is R⁴NH, NH₂, OH or halo; and R¹, R², R³ and R⁴ independently are alkyl, aryl, aralkyl, heteroalkyl or heterocyclic. Preferably, at least two of R¹, R², and R³ are aryl or aromatic heterocyclic. More preferably, X is R⁴NH, and at least three of R¹, R², R³ and R⁴ are aryl or aromatic heterocyclic. Most preferably, all of R¹, R², R³ and R⁴ are aryl.

In another preferred embodiment of the invention, a dye which is an anthraquinone dimer is added to a petroleum hydrocarbon. Anthraquinone dimers include: (i) substituted derivatives, having λₘₐₓ from 710 to 850 nm, of 6,15-dihydro-5,9,14,18-anthrazinetetrone, shown below, 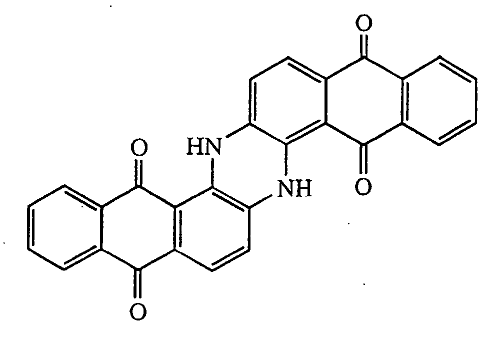 also known by the trade name INDANTHRENE; and (ii) other fused dimers of anthraquinones having extended conjugation and λₘₐₛ from 710 to 850 nm.
Preferably, the anthraquinone dimer is a substituted 6,15-dihydro-5,9,14,18-anthrazinetetrone of formula (II). 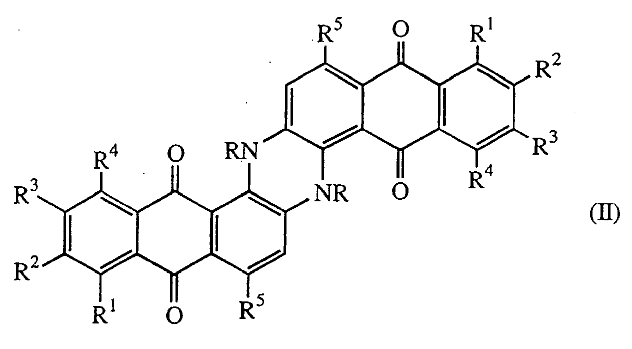 In formula (II), R¹, R², R³, and R⁴ independently are hydrogen, alkyl, heteroalkyl or alkylamino; R⁵ is hydrogen, alkyl, heteroalkyl, alkylamino, arylamino or aromatic-heterocyclic-amino; and R is hydrogen, alkyl, arylamino or aromatic-heterocyclic-amino; provided that one of R and R⁵ is arylamino or aromatic-heterocyclic-amino. Preferably, R¹, R², R³, and R⁴ are hydrogen.

In one preferred embodiment, R¹, R², R³, R⁴ and R⁵ are hydrogen and R is arylamino. Preferably, R is a hydrogen-bond donor arylamino group, e.g., phenylamino. Most preferably, R is phenylamino, such that the compound is of formula (III). 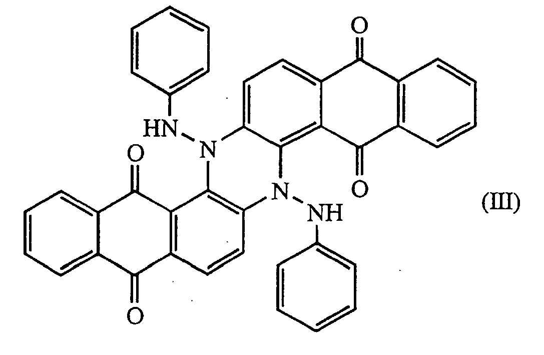 This compound has a λₘₐₛ of 790 nm.

In another preferred embodiment, R, R¹, R², R³, and R⁴ are hydrogen; and R⁵ is phenylamino, such that the compound is of formula (IV). 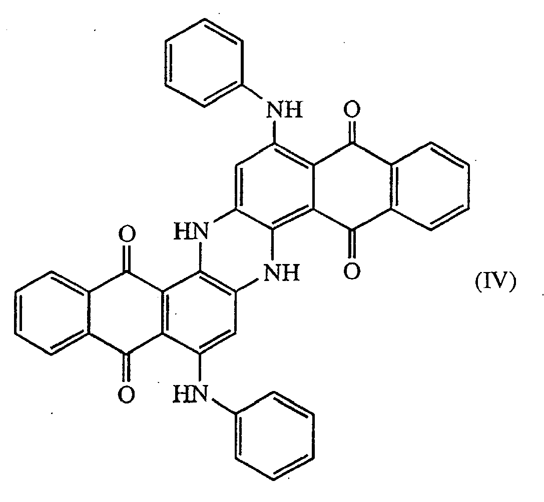 This compound is 6,15-dihydro-8,17-bis(phenylamino)-5,9,14,18-anthrazinetetrone, and has been sold commercially under the trade names C.I. VAT GREEN 6 and CALEDON GREEN RC.

Preferably the amount of each dye added to the petroleum hydrocarbon is at least 0.01 ppm, more preferably at least 0.02 ppm, and most preferably at least 0.03 ppm. The amount of each dye is less than 2 ppm, and preferably less than 1 ppm. Preferably, the marking is invisible, i.e., the dye cannot be detected by simple visual observation of the marked hydrocarbon. Preferably, a dye used in the method of this invention has an absorption maximum in the range from 720 nm to 850 nm, more preferably from 720 nm to 810 nm, and most preferably from 730 nm to 800 nm. Preferably, at least two dyes having absorption maxima at differential wavelengths are added to the petroleum hydrocarbon. Preferably, the dyes are detected by exposing the marked hydrocarbon to electromagnetic radiation having wavelengths in the portion of the spectrum containing the absorption maxima of the dyes and detecting the absorption of light. It is preferred that the detection equipment is capable of calculating dye concentrations and concentration ratios in a marked hydrocarbon. Typical spectrophotometers known in the art are capable of detecting the dyes used in the method of this invention when they are present at a level of at least 0.01 ppm. It is preferred to use the detectors described in U.S. Pat. No. 5,225,679, especially the SpecTrace^{™} analyzer available from Rohm and Haas Company, Philadelphia, PA. These analyzers use a filter selected based on the absorption spectrum of the dye, and use chemometric analysis of the signal by multiple linear regression methods to reduce the signal-to-noise ratio.

When the detection method does not involve performing any chemical manipulation of the marked hydrocarbon, the sample may be returned to its source after testing, eliminating the need for handling and disposal of hazardous chemicals. This is the case, for example, when the dyes are detected simply by measuring light absorption by a sample of the marked hydrocarbon.

In one embodiment of the invention, the dye is formulated in a solvent to facilitate its addition to the liquid hydrocarbon. The preferred solvents for tetrasubstituted anthraquinones are N-methylpyrrolidinone, N,N-dimethyl propylene urea, nitrobenzene, toluene and N,N-dimethylformamide. Preferably, the dye is present in the solvent at a concentration of from 0.1% to 10%.

### Examples

### Example 1: Synthesis of 1,4,5,8-tetra(phenylamino)anthraquinone

A mixture of 10.87 g of 1,4,5,8-tetrachloroanthraquinone , 50 g of aniline, 13.4 g of potassium acetate, 1.24 g of copper sulfate, and 3.41 g of benzyl alcohol was heated to 130 °C under nitrogen and maintained at this temperature for 6.5 hours, followed by another holding period at 170 °C for 6 hours. The reaction mixture was cooled to ambient temperature and the precipitate was filtered to give black solids. Recrystallization of the crude product from toluene afforded 6.0 g of a dark green crystalline material (> 95% purity with the structure confirmed by proton NMR as the desired product: 1,4,5,8-tetra(phenylamino)anthraquinone. This material had a maximum absorption band (λₘₐₓ) at a wavelength of 750 nm in toluene. The molar extinction coefficient (ε) was determined to be ∼30,500.

### Example 2: Synthesis of 1,4,5,8-tetra(4-n-butylphenylamino)anthraquinone

A mixture of 10.87 g of 1,4,5,8-tetrachloroanthraquinone and 95 g of 4-n-butylaniline was allowed to react at 190 °C for 12 hours. The reaction mixture was then cooled to 70 °C and diluted with an equal amount of ethanol. On standing and further cooling to ambient temperature, some precipitate was formed. The mixture was filtered, washed and recrystallized from xylenes/isopropanol to give 6.6 g of a dark green crystalline material (>95% purity) with the structure confirmed by proton NMR as the desired product of 1,4,5,8-tetra(4-n-butylphenylamino)anthraquinone. This material had a maximum absorption band (λₘₐₓ) at a wavelength of 762 nm in toluene. The molar extinction coefficient (ε) was determined to be ∼36,900.

### Example 3: Detection of Dyes in Petroleum Hydrocarbons

Solutions of 1,4,5,8-tetra(phenylamino)anthraquinone (TPAAQ) in xylenes, Texaco^{™} diesel fuel and Mobil^{™} regular gasoline at varying concentrations were prepared and analyzed with a laboratory spectrophotometer. The results are presented in the Table below, with expected and actual readings expressed as a percentage of the reading for 1 mg/L.

**Table**

| concentration, mg/L | expected reading | actual reading |
|---|---|---|
| TPAAQ in xylenes | | |
| 2.045 | 204 | 208 |
| 1.063 | 106 | 105 |
| 0.983 | 98 | 98 |
| 0.703 | 70 | 71 |
| 0.402 | 40 | 40 |
| 0.073 | 7 | 8 |
| 0.035 | 4 | 3 |
| TPAAQ in Texaco^{™} diesel fuel | | |
| 1.35 | 135 | 135 |
| 1.09 | 109 | 109 |
| 0.84 | 84 | 85 |
| 0.58 | 58 | 56 |
| 0.33 | 33 | 33 |
| 0.05 | 5 | 4 |
| TPAAQ in Mobil^{™} regular gasoline | | |
| 1.335 | 133 | 134 |
| 0.934 | 93 | 92 |
| 0.565 | 56 | 57 |
| 0.389 | 39 | 38 |
| 0.059 | 6 | 5 |
| 0.048 | 5 | 5 |

## Claims

1. A method for invisibly marking a liquid petroleum hydrocarbon; said method comprising adding to said liquid petroleum hydrocarbon at least one dye selected from the group consisting of 1,4,5,8-tetrasubstituted anthraquinones and anthraquinone dimers; wherein said at least one dye has an absorption maximum in the range from 710 nm to 850 nm and further wherein the amount of each dye is less than 2 ppm.

2. The method of claim 1 in which the liquid petroleum hydrocarbon is selected from the group consisting of gasoline, diesel fuel, kerosene, jet fuel and heating oil.

3. The method of claim 2 in which said at least one dye has formula (I) 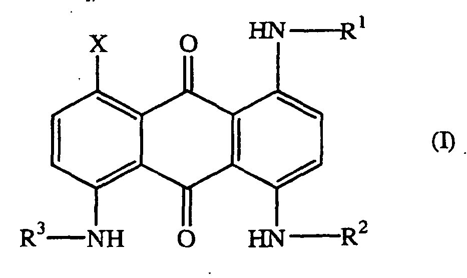 wherein X is R⁴NH, NH₂, OH or halo; and R¹, R², R³ and R⁴ independently are alkyl, aryl, aralkyl, heteroalkyl or heterocyclic.

4. The method of claim 3 in which X is R⁴NH, and at least three of R¹, R², R³ and R⁴ are aryl or aromatic heterocyclic.

5. The method of claim 2 in which said at least one dye has formula (II) 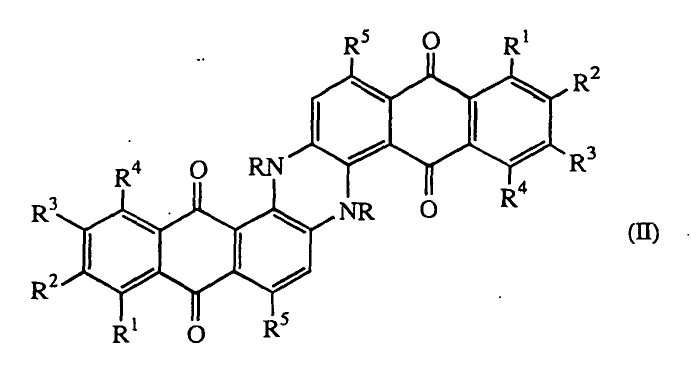 wherein R¹, R², R³, and R⁴ independently are hydrogen, alkyl, heteroalkyl or alkylamino; R⁵ is hydrogen, alkyl, heteroalkyl, alkylamino, arylamino or aromatic-heterocyclic-amino; and R is hydrogen, alkyl, arylamino or aromatic-heterocyclic-amino; provided that at least one of R and R⁵ is arylamino or aromatic-heterocyclic-amino.

6. A method for invisibly marking a liquid petroleum hydrocarbon; said method comprising adding to said liquid petroleum hydrocarbon a dye of formula (I) 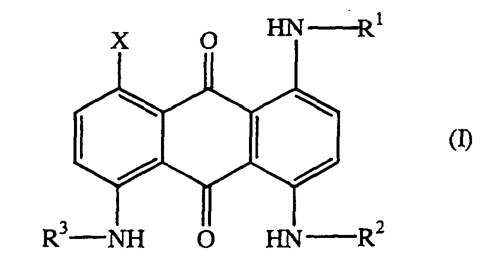 wherein X is R⁴NH, NH₂, OH or halo; R¹, R², R³ and R⁴ independently are alkyl, aryl, aralkyl, heteroalkyl or heterocyclic; at least three of R¹, R², R³ and R⁴ are aryl groups; and said dye has an absorption maximum in the range from 720 nm to 810 nm.

7. The method of claim 6 in which X is R⁴NH; R¹, R², R³ and R⁴ independently are aryl or aromatic heterocyclic; the liquid petroleum hydrocarbon is selected from the group consisting of gasoline, diesel fuel, kerosene, jet fuel and heating oil; and the dye is detected without performing any chemical manipulation of the liquid petroleum hydrocarbon.

8. A method for invisibly marking a liquid petroleum hydrocarbon; said method comprising adding to said liquid petroleum hydrocarbon a dye of formula (II) 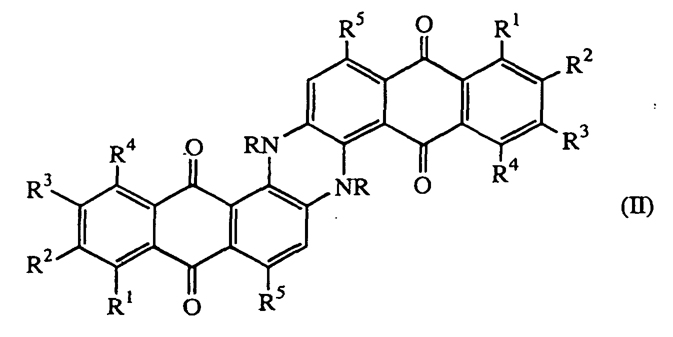 wherein R¹, R², R³, and R⁴ independently are hydrogen, alkyl, heteroalkyl or alkylamino; R⁵ is hydrogen, alkyl, heteroalkyl, alkylamino, arylamino or aromatic-heterocyclic-amino; and R is hydrogen, alkyl, arylamino or aromatic-heterocyclic-amino; provided that one of R and R⁵ is arylamino or aromatic-heterocyclic-amino; and said dye has an absorption maximum in the range from 720 nm to 810 nm.

9. The method of claim 8 in which R, R¹, R², R³, and R⁴ are hydrogen; R⁵ is arylamino; the liquid petroleum hydrocarbon is selected from the group consisting of gasoline, diesel fuel, kerosene, jet fuel and heating oil; and the dye is detected without performing any chemical manipulation of the liquid petroleum hydrocarbon.

## Patentansprüche

1. Verfahren zum unsichtbaren Markieren eines flüssigen Erdölkohlenwasserstoffes, wobei das Verfahren das Zugeben mindestens eines Farbstoffes, ausgewählt aus der Gruppe, bestehend aus 1,4,5,8-tetrasubstituierten Anthrachinonen und Anthrachinon-Dimeren, zu dem flüssigen Erdölkohlenwasserstoff umfasst, wobei der mindestens eine Farbstoff ein Absorptionsmaximum in dem Bereich von 710 nm bis 850 nm aufweist und weiter wobei die Menge jedes Farbstoffes weniger als 2 ppm beträgt.

2. Verfahren nach Anspruch 1, in welchem der flüssige Erdölkohlenwasserstoff aus der Gruppe, bestehend aus Benzin, Dieselkraftstoff, Kerosin, Düsenkraftstoff und Heizöl, ausgewählt ist.

3. Verfahren nach Anspruch 2, in welchem der mindestens eine Farbstoff die Formel (I) aufweist, 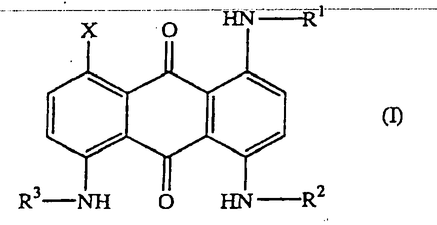 wobei X R⁴NH, NH₂, OH oder Halogen ist und R¹, R², R³ und R⁴ unabhängig Alkyl, Aryl, Aralkyl, Heteroalkyl oder heterozyklisch sind.

4. Verfahren nach Anspruch 3, in welchem X R⁴NH ist und mindestens drei von R¹, R², R³ und R⁴ Aryl oder aromatisch heterozyklisch sind.

5. Verfahren nach Anspruch 2, in welchem der mindestens eine Farbstoff die Formel (II) 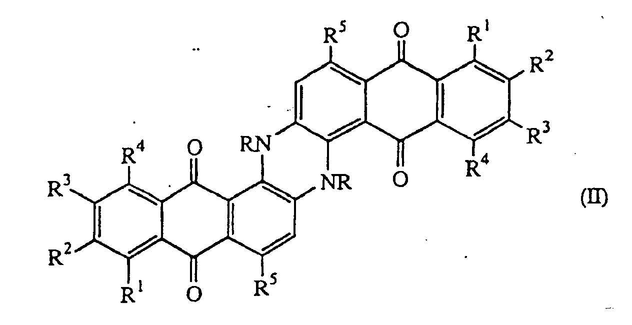 aufweist, wobei R¹, R², R³ und R⁴ unabhängig Wasserstoff, Alkyl, Heteroalkyl oder Alkylamino sind, R⁵ Wasserstoff, Alkyl, Heteroalkyl, Alkylamino, Arylamino oder Aromatisch-heterozyklisch-amino ist und R Wasserstoff, Alkyl, Arylamino oder Aromatisch-heterozyklisch-amino ist, mit der Maßgabe, dass mindestens eines von R und R⁵ Arylamino oder Aromatisch-heterozyklisch-amino ist.

6. Verfahren zum unsichtbaren Markieren eines flüssigen Erdölkohlenwasserstoffes, wobei das Verfahren das Zugeben eines Farbstoffes der Formel (I) 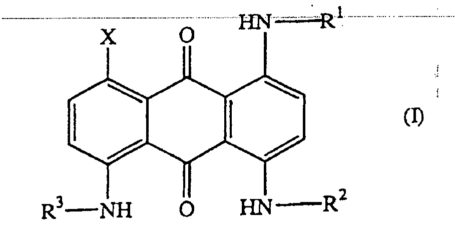 wobei X R⁴NH, NH₂, OH oder Halogen ist, R¹, R², R³ und R⁴ unabhängig Alkyl, Aryl, Aralkyl, Heteroalkyl oder heterozyklisch sind, mindestens drei von R¹, R², R³ und R⁴ Arylgruppen sind,
zu dem flüssigen Erdölkohlenwasserstoff umfasst, und der Farbstoff ein Absorptionsmaximum in dem Bereich von 720 nm bis 810 nm aufweist.

7. Verfahren nach Anspruch 6, in welchem X R⁴NH ist, R¹, R², R³ und R⁴ unabhängig Aryl oder aromatisch heterozyklisch sind, der flüssige Erdölkohlenwasserstoff aus der Gruppe, bestehend aus Benzin, Dieselkraftstoff, Kerosin, Düsenkraftstoff und Heizöl, ausgewählt ist, und der Farbstoff ohne die Durchführung jeglicher chemischer Manipulation des flüssigen Erdölkohlenwasserstoffes nachgewiesen wird.

8. Verfahren zum unsichtbaren Markieren eines flüssigen Erdölkohlenwasserstoffes, wobei das Verfahren das Zugeben eines Farbstoffes der Formel (II) 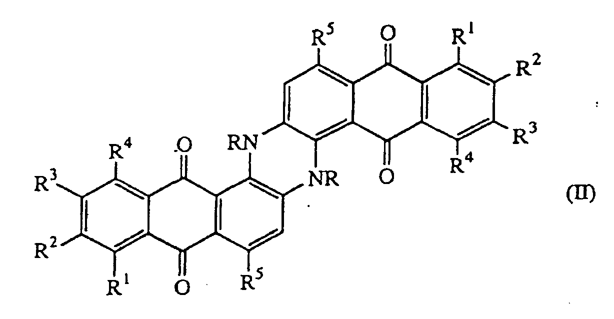 wobei R¹, R², R³ und R⁴ unabhängig Wasserstoff, Alkyl, Heteroalkyl oder Alkylamino sind, R⁵ Wasserstoff, Alkyl, Heteroalkyl, Alkylamino, Arylamino oder Aromatisch-heterozyklisch-amino ist und R Wasserstoff, Alkyl, Arylamino oder Aromatisch-heterozyklisch-amino ist, mit der Maßgabe, dass eines von R und R⁵ Arylamino oder Aromatisch-heterozyklisch-amino ist,
zu dem flüssigen Erdölkohlenwasserstoff umfasst, und der Farbstoff ein Absorptionsmaximum in dem Bereich von 720 nm bis 810 nm aufweist.

9. Verfahren nach Anspruch 8, in welchem R, R¹, R², R³ und R⁴ Wasserstoff sind, R⁵ Arylamino ist, der flüssige Erdölkohlenwasserstoff aus der Gruppe, bestehend aus Benzin, Dieselkraftstoff, Kerosin, Düsenkraftstoff und Heizöl, ausgewählt ist, und der Farbstoff ohne die Durchführung jeglicher chemischer Manipulation des flüssigen Erdölkohlenwasserstoffes nachgewiesen wird.

## Revendications

1. Procédé pour le marquage invisible d'un hydrocarbure pétrolier liquide ; ledit procédé comprenant l'addition audit hydrocarbure pétrolier liquide d'au moins un colorant choisi dans le groupe consistant en les anthraquinones 1,4,5,8-tétrasubstituées et les dimères d'anthraquinones ; où ledit au moins un colorant a un maximum d'absorption dans la plage de 710 nm à 850 nm et où, en outre, la quantité de chaque colorant est inférieure à 2 ppm.

2. Procédé selon la revendication 1 où l'hydrocarbure pétrolier liquide est choisi dans le groupe consistant en l'essence, le carburant diesel, le kérosène, le carburéacteur et le mazout.

3. Procédé selon la revendication 2 où ledit au moins un colorant a la formule (I) 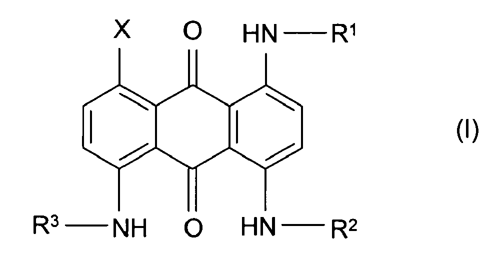 où X est R⁴NH, NH₂, OH ou halogéno ; et R¹, R², R³ et R⁴ sont indépendamment alkyle, aryle, aralkyle, hétéroalkyle ou hétérocyclique.

4. Procédé selon la revendication 3 où X est R⁴NH et au moins trois parmi R¹, R², R³ et R⁴ sont aryle ou hétérocyclique aromatique.

5. Procédé selon la revendication 2 où ledit au moins un colorant a la formule (II) 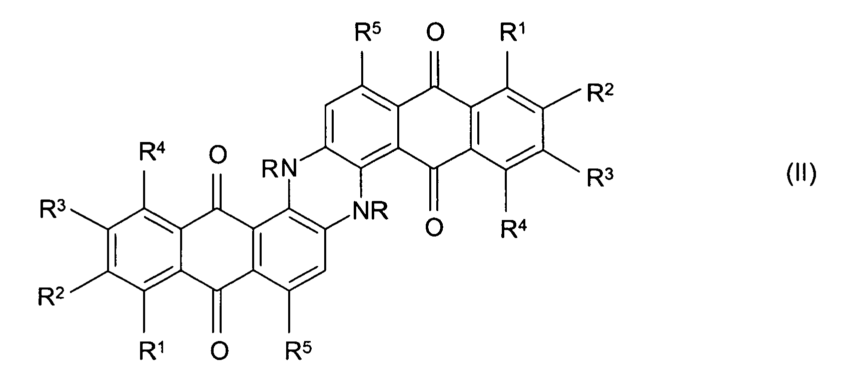 où R¹, R², R³ et R⁴ sont indépendamment l'hydrogène, alkyle, hétéroalkyle ou alkylamino ; R⁵ est l'hydrogène, alkyle, hétéroalkyle, alkylamino, arylamino ou amino-hétérocyclique-aromatique ; et R est l'hydrogène, alkyle, arylamino ou amino-hétérocyclique-aromatique ; à condition qu'au moins l'un parmi R et R⁵ soit arylamino ou amino-hétérocyclique-aromatique .

6. Procédé pour le marquage invisible d'un hydrocarbure pétrolier liquide ; ledit procédé comprenant l'addition audit hydrocarbure pétrolier liquide d'un colorant de formule (I) 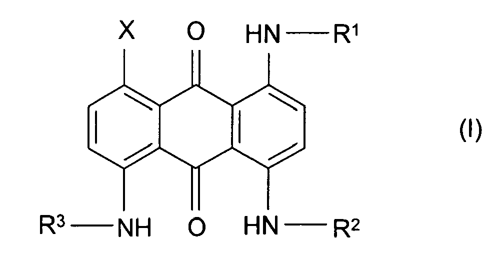 où X est R⁴NH, NH₂, OH ou halogéno ; R¹, R², R³ et R⁴ sont indépendamment alkyle, aryle, aralkyle, hétéroalkyle ou hétérocyclique ; au moins trois parmi R¹, R², R³ et R⁴ sont des groupes aryles ; et ledit colorant a un maximum d'absorption dans la plage de 720 nm à 810 nm.

7. Procédé selon la revendication 6 où X est R⁴NH ; R¹, R², R³ et R⁴ sont indépendamment aryle ou hétérocyclique aromatique ; l'hydrocarbure pétrolier liquide est choisi dans le groupe consistant en l'essence, le carburant diesel, le kérosène, le carburéacteur et le mazout ; et le colorant est détecté sans accomplir aucune manipulation chimique de l'hydrocarbure pétrolier liquide.

8. Procédé pour le marquage invisible d'un hydrocarbure pétrolier liquide ; ledit procédé comprenant l'addition audit hydrocarbure pétrolier liquide d'un colorant de formule (II) 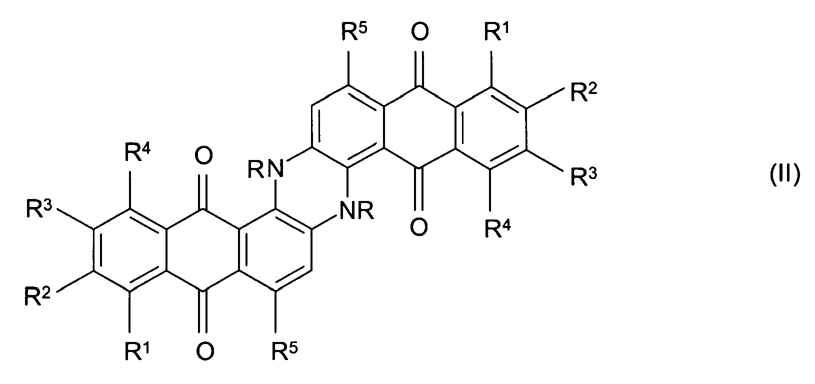 où R¹, R², R³ et R⁴ sont indépendamment l'hydrogène, alkyle, hétéroalkyle ou alkylamino ; R⁵ est l'hydrogène, alkyle, hétéroalkyle, alkylamino, arylamino ou amino-hétérocyclique-aromatique ; et R est l'hydrogène, alkyle, arylamino ou amino-hétérocyclique-aromatique ; à condition que l'un parmi R et R⁵ soit arylamino ou amino-hétérocyclique-aromatique ; et ledit colorant a un maximum d'absorption dans la plage de 720 nm à 810 nm.

9. Procédé selon la revendication 8 où R, R¹, R², R³ et R⁴ sont l'hydrogène ; R⁵ est arylamino ; l'hydrocarbure pétrolier liquide est choisi dans le groupe consistant en l'essence, le carburant diesel, le kérosène, le carburéacteur et le mazout ; et le colorant est détecté sans accomplir aucune manipulation chimique de l'hydrocarbure pétrolier liquide.
